# EUROPEAN PATENT APPLICATION

(11) **EP 1 816 792 A1**
(43) Date of publication of application: **08.08.2007**
(21) Application number: 05809731.2
(22) Date of filing: 21.11.2005
(51) Int. Cl.: H04L 12/28, H04Q 7/38

(54) **WIRELESS LAN TRANSMISSION SYSTEM, AND WIRELESS COMMUNICATION TERMINAL**

(30) Priority: 24.11.2004 JP 2004338426
(71) Applicant: MATSUSHITA ELECTRIC INDUSTRIAL CO., LTD., Osaka 571-8501 (JP)
(72) Inventor: NAKASO, Mariko Matsushita Electric Industrial Co.Ltd, Osaka-shi, Osaka 540-6319 (JP); MASUDA, Kouichi Matsushita Electric Industrial Co.Ltd, Osaka-shi, Osaka 540-6319 (JP)
(74) Representative: Gassner, Wolfgang
(86) International application number: PCT/JP2005/021341
(87) International publication number: WO 2006/057210

(57) **Abstract**

Provided in a wireless LAN transmission system, having convenience and improved security, in which a wireless communication terminal located in a wireless communication area is capable of changing a setting of a connection, and capable of disconnecting the wireless communication terminal from the connection if the connection is unnecessary. A control management section (7) controls a switching section (5) based on an initial setting (S001). When a beacon signal transmitted from the wireless communication terminal is detected in a signal monitoring block (8) (S002), the control management section switches an operation of the switching section (5) so as to transmit signals outputted from all of at least one access point (4) to the wireless communication terminal (S003). If the wireless communication terminal issues a communication path-setting-change request while the signals outputted from all of the at least one access point is transmitted to the wireless communication terminal (S004), the control management section examines whether the wireless communication terminal is operated by an authorized user (S005), further determines whether a setting can be changed in accordance with the communication path-setting-change request (S006), and updates a stored setting based on the communication path-setting-change request (S008). Thereafter, the control management section transmits a message indicating that a change in the setting has been completed (S009), and changes the setting of a communication path to the updated setting thereof (S0101), thereby allowing the wireless communication terminal to connect with a desired one of the at least one access point (4) (S011).

## Description

### TECHNICAL FIELD

The present invention relates to a system for transmitting any of a plurality of wireless LAN signals to a wireless base station, and more particularly to a wireless LAN transmission system, having convenience and a high level of security, in which a wireless communication terminal is capable of performing connection and disconnection settings.

### BACKGROUND ART

In general, a conventional wireless LAN system operating in an infrastructure mode comprises a wireless communication terminal and a wireless LAN access point (hereinafter referred to as an access point), and a communication is performed between the wireless communication terminal and the access point by means of a wireless communication path. The access point is installed indoors or outdoors, and if a wireless communication terminal is located in an area where a wireless signal transmitted from an access point can be received, the wireless communication terminal can communicate with the access point. Typically, when the wireless LAN system, which complies with IEEE 802.11a or IEEE 802.11b, is used indoors where line of sight visibility is good, a communication can be performed within a range of a radius of 50m or 100m, respectively.

Therefore, if the wireless communication terminal is moved away from the access point to another area in which the wireless signal cannot be received, the wireless communication terminal cannot communicate with the access point.

Also, in recent years, in order to improve security, when a wireless communication terminal communicates with an access point, a password certification such as a WEP (Wired Equivalent Privacy) or a MAC certification is performed. In a case where these certifications are performed, the wireless communication terminal can connect to only an access point to which the wireless communication terminal is previously permitted to connect. Even when a wireless communication terminal is located in a communication area of an access point, the wireless communication terminal cannot communicate with the access point without a permission to connect to the access point.

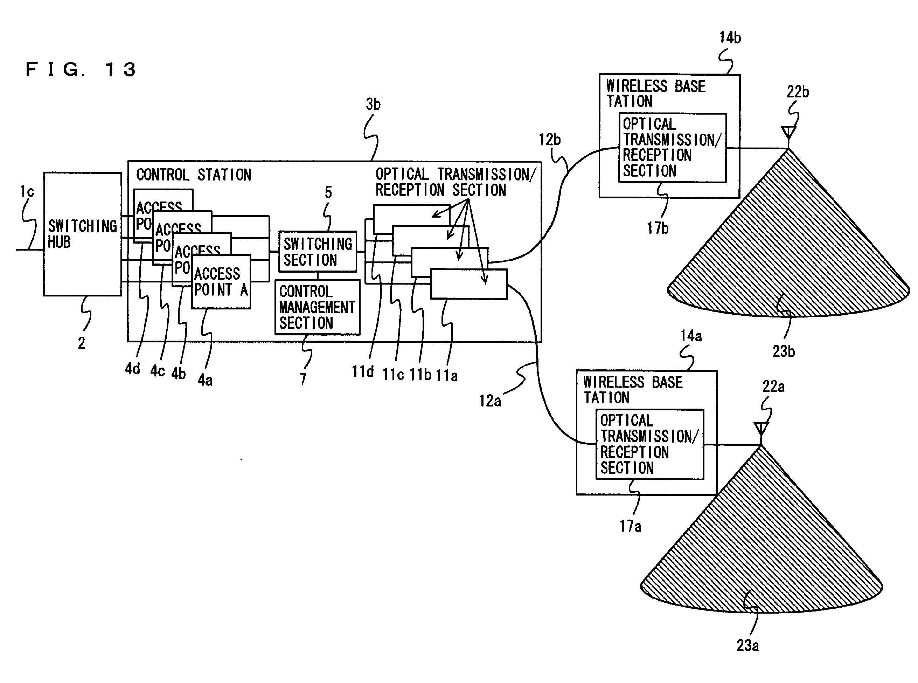

In order to solve such problems, there is a wireless LAN system in which a control station controls communication paths of a plurality of wireless LAN signals, and any of the wireless LAN signals is optically transmitted to an arbitrary wireless base station. FIG. 13 is a diagram illustrating a configuration of a conventional wireless LAN transmission system. In the wireless LAN transmission system shown in FIG. 13, a control station 3b is connected to a plurality of wireless base stations 14a and 14b via a plurality of optical fibers 12a and 12b, respectively. Furthermore, a great number of wireless communication terminals (not shown) exist in each of the wireless communication areas 23a and 23b, where the wireless base stations can perform a wireless communication, respectively. Hereinafter, an operation of the conventional wireless LAN transmission system will be described with reference to FIG. 13.

The control station 3b includes a plurality of access points 4a to 4d, a plurality of optical transmission/reception sections 11a to 11d, a switching section 5, and a control management section 7 for controlling and managing the switching section 5. In general, an access point releases a modulated signal, as a wireless signal, into the air via an antenna. However, each of the access points 4a to 4d outputs the modulated signal, not as the wireless signal but as an electric signal, to a transmission path via a coaxial cable. For example, taking the access point 4a as an example among the access points 4a to 4d, when a signal outputted from the access point 4a is transmitted to the wireless communication area 23a, the control station 3b firstly causes the switching section 5 to transmit an electric signal outputted from the access point 4a to the optical transmission/reception section 11a, and then causes the optical transmission/reception section 11a to convert the electric signal into an optical signal and to transmit the optical signal to the wireless base station 14a via the optical fiber 12a. Thereafter, the optical signal is reconverted into an electric signal in an optical transmission/reception section 17a included in the wireless base station 14a, and the electric signal is transmitted, as a wireless LAN signal, from an antenna section 22a to the wireless communication terminals located in the wireless communication area 23a. Similarly, when signals outputted from a plurality of access points are transmitted to one wireless communication area, or when a signal outputted from one access point is transmitted to a plurality of wireless communication areas, the control management section 7 controls the switching section 5 so as to set a desired commutation state.

As described above, the conventional wireless LAN transmission system changes a communication path of a signal outputted from an access point with which a wireless communication terminal is permitted to communicate, thereby making it possible to allow the wireless communication terminal located in any of the wireless communication areas to communicate with any of the accesspoints. Furthermore, the aforementioned system interrupts a signal outputted from an access point to an unnecessary communication area, thereby making it possible to improve security.
[Patent Document 1] International Publication No. WO 04/036832

### DISCLOSURE OF THE INVENTION

### PROBLEMS TO BE SOLVED BY THE INVENTION

In the conventional wireless LAN transmission system, the control management section 7 performs a setting of a connection between each of the access points and each of the wireless communication areas, and changes the setting of the connection therebetween. In general, the control management section 7 is installed inside or in the vicinity of the control station 3b, or in other areas. As methods of causing the control management section 7 to change the setting the connection mentioned above, a user of a wireless communication terminal visits the control station 3b so as to directly cause the control management section 7 to change the setting of the connection, or the user remotely causes the control management section 7 to change the setting of the connection via a network. However, it is cumbersome for the user of the wireless communication terminal to visit the control station 3b. Even when the user of the wireless communication terminal remotely causes the control management section 7 to change the setting of the connection, he or she is required to enter a wireless communication area which is accessible to the control management section 7. That is, when a user located in a wireless communication area operates a wireless communication terminal to perform a communication, and a signal, outputted from an access point to which the wireless communication terminal is permitted to connect, is not transmitted to the wireless communication area, there is a problem in that the user must move once to an environment in which he or she can control the control management section 7, i.e., another wireless communication area receiving the signal outputted from the access point to which the wireless communication terminal is permitted to connect, change the setting of the connection, and return to the wireless communication area.

Furthermore, in the conventional wireless LAN transmission system, if a connection setting is once performed so as to transmit a signal outputted from an access point to a wireless communication area, and a disconnection setting for interrupting the signal fails to be performed even after a communication is ended, there is another problem in that the signal outputted from the access point continues to be transmitted to the wireless communication area even during an unnecessary time period, thereby increasing a possibility that a malicious third party located in the wireless communication area may connect to the network.

Therefore, an object of the present invention is to provide a wireless LAN transmission system, having convenience and a high level of security, in which a wireless communication terminal is capable of, regardless of whether the wireless communication terminal is located in a wireless communication area corresponding to an access point to which the wireless communication terminal is permitted to connect, or the wireless communication terminal moves to another wireless communication area corresponding to another access point to which the wireless communication terminal is not permitted to connect, changing a connection setting while being in either of the wireless communication areas, establishing a communication with a desired access point to which the wireless communication terminal is permitted to connect, and disconnecting the wireless communication terminal from the access point, when necessary.

### SOLUTION TO THE PROBLEMS

The present invention is a wireless LAN transmission system capable of allowing a wireless communication terminal existing in a local area to communicate with networks inside and outside the local area, the wireless LAN transmission system comprising: a wireless base station for forming a wireless communication area in the local area, and performing a wireless communication with the wireless communication terminal existing in the wireless communication area corresponding to the wireless base station, by means of the wireless LAN transmission system; and a control station including at least one wireless LAN access point which is connected to the wireless base station via a wired communication path, wherein the control station includes: a communication path switching section for transmitting a signal outputted from each of the at least one wireless LAN access point to the wireless base station; a control management section for controlling the communication path switching section and storing the communication path having been set; and a beacon signal detecting section for detecting a beacon signal for active scanning transmitted from the wireless communication terminal via the wireless base station, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, and the control management section has a control station for controlling the communication path switching section so as to transmit signals outputted from all of the at least one wireless LAN access point to the wireless base station through which the beacon signal has been transmitted, when the beacon signal is detected in the beacon signal detecting section, and causes the wireless communication terminal to temporarily connect with any of the at least one wireless LAN access point to which the wireless communication terminal is permitted to connect, by changing the communication path based on the beacon signal, and causes the wireless communication terminal to permanently connect with the predetermined one of the at least one wireless LAN access point to which the wireless communication terminal is permitted to connect, based on a communication path-setting-change request transmitted from the wireless communication terminal to the control management section, while the wireless communication terminal is temporarily connected with the any of the at least one wireless LAN access point to which the wireless communication terminal is permitted to connect.

In a case where the wireless LAN wireless communication terminal is not connected to any of the at least one access point, a method, in which the wireless LAN communication terminal transmits a probe request frame as the beacon signal, and searches for the predetermined one of the at least one access point based on a response for the beacon signal, is used (active scanning).

According to the present invention, when the control station detects the beacon signal for active scanning, the signals outputted from all of the at least one access point are transmitted to the wireless base station, thereby allowing the wireless communication terminal to communicate with any of the at least one access point to which the wireless communication terminal is permitted to connect, while receiving the signals outputted from all of the at least one access point. Thus, the wireless communication terminal is able to connect to the control management section via the network, thereby making it possible to change a connection setting so that the signal outputted from the predetermined one of the at least one access point (among any of the at least one access point to which the wireless communication terminal is permitted to connect) is to be permanently transmitted to the wireless communication area in which the wireless communication terminal exists. Thereafter, the wireless communication terminal is also able to interrupt, based on the changed connection setting, signals outputted from any of the at least one access point which is unnecessary, thereby making it possible to improve security.

Note that the control management section is preferably configured so as to operate in accordance with a setting, of the communication path, which is stored in the control management section when a predetermined time period has passed after the beacon signal is detected.

According to the present invention, it is preferable that channels, having frequencies different from each other, are respectively set for the at least one wireless LAN access point, the wireless communication terminal is able to transmit a wireless LAN channel signal corresponding to each of the at least one wireless LAN access point, and the beacon signal detecting section includes : a plurality of band path filters having frequency bands in which the wireless LAN channel signal transmitted from the wireless communication terminal is inputted to the band path filters respectively corresponding to the channels, and the wireless LAN channel signal inputted to each of the band path filters is extracted; a signal detecting section for detecting a signal which has passed through each of the band path filters; and a determination section for determining whether or not the wireless LAN signal inputted to all of the band path filters is extracted within a predetermined time period, and determining that the beacon signal has been transmitted, when it is determined that the wireless LAN signal inputted to all of the band path filters is extracted within the predetermined time period.

After the wireless communication terminal transmits the beacon signal for the probe request while active scanning is performed, a timer waits for a time period called a minimum channel monitoring time. When no response is transmitted from any of the at least one access point after the minimum channel monitoring time has passed, the wireless communication terminal searches for another channel.

On the other hand, when the response is transmitted from the aforementioned access point within the minimum channel monitoring time, the wireless communication terminal continues to monitor the channel. When a time measured by the timer reaches a time period called a maximum channel monitoring time, the control management section performs a response process based on the received probe request. Thereafter, if a communication is established, the channel is fixed so as to continue the communication. Therefore, the band path filters, for respectively passing the plurality of wireless LAN signals corresponding to the channels, are provided in the control station. When the signals passed through all of the band path filters are detected within the predetermined time period, it can be determined that the beacon signal for active scanning has been transmitted from the wireless base station.

According to the present invention, it is preferable that channels, having frequencies different from each other, are respectively set for the at least one wireless LAN access point, the wireless communication terminal is able to transmit a wireless LAN channel signal corresponding to each of the at least one wireless LAN access point, and the beacon signal detecting section includes: two band path filters; and a signal detecting section for detecting a signal which has passed through each of the band path filters, wherein the two band path filters have frequency bands in which the wireless LAN channel signal transmitted from the wireless communication terminal is inputted to the two band path filters respectively corresponding to the channels having frequencies adj acent to each other, and the wireless LAN channel signal inputted to each of the two band path filters is extracted, and a determination section for determining whether or not the wireless LAN signal inputted to all of the two band path filters is extracted within a predetermined time period, and determining that the beacon signal has been transmitted, when it is determined that the wireless LAN signal inputted to all of the two band path filters corresponding to the channels having the frequencies adjacent to each other is extracted within the predetermined time period.

Generally in the wireless LAN system, when a plurality of access points are used, interference occurs between channels having adjacent frequencies. Thus, a frequency interval is provided between each two of the channels. Therefore, two band path filters, respectively corresponding to two channels having frequencies adjacent to each other, are intentionally provided, thereby detecting whether a signal passes through the both band path filters. Thus, it can be determined that the beacon signal is transmitted as a special signal from the wireless base station, thereby making it possible to further simplify a configuration of the system, as compared to the case where three or more band path filters are provided.

According to the present invention, it is preferable that the beacon signal detecting section includes: a conversion section for frequency-converting a signal; at least two band path filters for passing the frequency-converted signal; and a signal detecting section for detecting the signal which has passed through each of the band path filters, wherein the beacon signal detecting section has a determination section for determining whether or not the frequency-converted signal passes through all of the band path filters within a predetermined time period, and determining that the beacon signal has been transmitted, when it is determined that the frequency-converted signal passes through all of the band path filters within the predetermined time period. Each of the band path filters preferably has a pass band corresponding to a wavelength of a wireless LAN signal which has been frequency-converted.

Therefore, the band path filters can be simplified, and can be smaller in size.

The present invention is a wireless LAN transmission system capable of allowing a wireless communication terminal existing in a local area to communicate with networks inside and outside the local area, the wireless LAN transmission system comprising: a wireless base station for forming a wireless communication area in the local area, and performing a wireless communication with the wireless communication terminal existing in the wireless communication area corresponding to the wireless base station, by means of the wireless LAN transmission system; and a control station including at least one wireless LAN access point which is connected to the wireless base station via a wired communication path, wherein the control station includes: a communication path switching section for transmitting a signal outputted from each of the at least one wireless LAN access point to the wireless base station; a control management section for controlling the communication path switching section and storing the communication path having been set; and a signal detecting section for detecting a signal transmitted from the wireless communication terminal via the wireless base station, wherein when the signal transmitted from the wireless communication terminal is not detected in the signal detecting section within a predetermined time period, the control management section changes the communication path so as not to transmit signals outputted from all of the at least one wireless LAN access point to the wireless base station.

Thus, when no signal is detected in the signal detecting section of the control station for the predetermined time period, i.e., when no wireless communication terminal exists in the communication area formed by the wireless base station, the control management section physically interrupts the signals outputted from all of the at least one wireless LAN access point. Therefore, since no signal is outputted to the communication area during an unnecessary time period, a malicious third party cannot tap or intercept a signal, or cannot connect to the network, thereby making it possible to improve the security.

According to the present invention, it is preferable that the signal detecting section detects a signal corresponding to a channel set for each of the at least one wireless LAN access point, and when the signal corresponding to the channel set for each of the at least one wireless LAN access point is not detected within a predetermined time period, the control management section changes the communication path so as not to transmit the signal corresponding to the channel set for each of the at least one wireless LAN access point.

Thus, it becomes possible to manage a timing of disconnecting the wireless communication terminal from each of the at least one access point. As compared with a case where the wireless communication terminal is disconnected from all of the at least one access point when no signal transmitted from the wireless communication terminal is detected, the security can be further improved.

The present invention is a wireless LAN transmission system capable of allowing a wireless communication terminal existing in a local area to communicate with networks inside and outside the local area, the wireless LAN transmission system comprising: a wireless base station for forming a wireless communication area in the local area, and performing a wireless communication with the wireless communication terminal existing in the wireless communication area corresponding to the wireless base station, by means of the wireless LAN transmission system; and a control station including at least one wireless LAN access point which is connected to the wireless base station via a wired communication path, wherein channels, having frequencies different from each other, are respectively set for the at least one wireless LAN access point, the control station includes: a communication path switching section for transmitting a signal outputted from each of the at least one wireless LAN access point to the wireless base station; a control management section for controlling the communication path switching section and storing the communication path having been set; and a beacon signal detecting section for detecting a beacon signal for active scanning transmitted from the wireless communication terminal via the wireless base station, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, and the control management section has a control station for controlling the communication path switching section so as to transmit signals outputted from all of the at least one wireless LAN access point to the wireless base station through which the beacon signal has been transmitted, when the beacon signal is detected in the beacon signal detecting section, and causes the wireless communication terminal to temporarily connect with any of the at least one wireless LAN access point to which the wireless communication terminal is permitted to connect, by changing the communication path based on the beacon signal, and causes the wireless communication terminal to permanently connect with the predetermined one of the at least one wireless LAN access point to which the wireless communication terminal is permitted to connect, based on a communication path-setting-change request transmitted from the wireless communication terminal to the control management section, while the wireless communication terminal is temporarily connected with the any of the at least one wireless LAN access point to which the wireless communication terminal is permitted to connect, and changes, when the beacon signal detecting section does not detect signals corresponding to all of the channels or a signal corresponding to a predetermined one of the channels, the communication path so as not to transmit the signals outputted from all of the at least one access point or the signal outputted from one of the at least one access point set for the predetermined one of the channels, to the wireless base station through which the beacon signal has been transmitted.

Thus, when any of the at least one access point is not used, no signal is transmitted from the any of the at least one access point to the wireless communication terminal via the wireless base station, thereby improving the security. Also, when the beacon signal for active scanning transmitted from the wireless communication terminal is detected, the signals outputted from all of the at least one access point is once transmitted to the wireless base station, thereby allowing the wireless communication terminal to perform a setting of the communication path while receiving the signals outputted from all of the at least one access point.

According to the present invention, it is preferable that the control management section changes, at a predetermined time interval, the communication path so as not to transmit the signals outputted from all of the at least one access point or the signal outputted from the one of the at least one access point set for the predetermined one of the channels, to the wireless base station, and changes the communication path so as to transmit the signals outputted from all of the at least one wireless LAN access point to the wireless base station, when the beacon signal is detected in the beacon signal detecting section, and operates in accordance with a communication path setting, which is stored in the control management section when a predetermined time period has passed after the beacon signal is detected.

Thus, it becomes possible to regularly determine whether the wireless communication terminal is operated by an authorized user, thereby making it possible to further improve the security.

The present invention is a wireless LAN transmission system capable of allowing a wireless communication terminal existing in a local area to communicate with networks inside and outside the local area, the wireless LAN transmission system comprising: a wireless base station for forming a wireless communication area in the local area, and performing a wireless communication with the wireless communication terminal existing in the wireless communication area corresponding to the wireless base station, by means of the wireless LAN transmission system; and a control station including at least one wireless LAN access point which is connected to the wireless base station via a wired communication path, wherein the control station includes: a communication path switching section for transmitting a signal outputted from each of the at least one wireless LAN access point to the wireless base station; a control management section for controlling the communication path switching section and storing the communication path having been set; and a detection section for detecting unauthorized access from the wireless communication area, and the control management section causes the control management section not to transmit, for a predetermined time period, signals outputted from all of the at least one wireless LAN access point to the wireless base station, when the unauthorized access is detected in the detection section.

Thus, even when the malicious third party attempts to tap or intercept a wireless signal, or attempts to connect to the network, the signals transmitted to the wireless base station are forcefully interrupted for the predetermined time period, thereby making it possible to further improve the security.

According to the present invention, it is preferable that the wireless base station has a communication path setting information displaying section for displaying communication path setting information, of each of the at least one wireless LAN access point, which is transmitted from the control station.

Thus, it becomes possible to allow a user of the wireless communication terminal located in the wireless communication area to determine one of the at least one access point which has transmitted a signal to the wireless base station, thereby providing the user with convenience.

According to the present invention, it is preferable that the control station includes signal oscillators, whose number is the same as that of the at least one wireless LAN access point, for transmitting signals having oscillatory frequencies different from each other, and superimposes each of the signals transmitted from the signal oscillators on the signal transmitted through the communication path from each of the at least one wireless LAN access point, so as to be transmitted to the wireless base station, and the wireless base station includes: a detection section for detecting each of the signals transmitted from the signal oscillators; and a display section for displaying that the signal outputted from each of the at least one wireless LAN access point is transmitted, when the detection section detects each of the signals transmitted from the signal oscillators.

Thus, it becomes possible to allow the wireless base station to easily determine one of the at least one access point which has transmitted a signal thereto, thereby making it possible to simplify the wireless base station.

The present invention is a wireless communication terminal for communicating with networks inside and outside a local area by using the wireless LAN transmission system according to claim 1, the wireless communication terminal comprising: a transmission section for transmitting a beacon signal, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, in the wireless transmission system, wherein when a signal is transmitted, in response to the transmitted beacon signal, to the wireless communication terminal from any of the at least one wireless LAN access point to which the wireless communication is permitted to connect, the wireless communication terminal receives the signal via a wireless base station included in the wireless LAN transmission system, and temporarily connects with the any of the at least one wireless LAN access point which has transmitted the signal, and transmits a communication path-setting-change request to the control management section included in the wireless LAN transmission system, while the wireless communication terminal is temporarily connected with the any of the at least one wireless LAN access point, and permanently connects with the predetermined one of the at least one wireless LAN access point to which the wireless communication terminal is permitted to connect, after a setting of a communication path is changed in accordance with the communication path-setting-change request.

Thus, in the wireless communication area, it becomes possible to change a setting of the communication path by using the wireless communication terminal, and cause the wireless communication terminal to start communicating with the predetermined one of the at least one access point.

### EFFECT OF THE INVENTION

According to the present invention, it is possible to provide a wireless LAN transmission system, having convenience and a high level of security, in which a wireless communication terminal is capable of, regardless of whether the wireless communication terminal is located in a wireless communication area corresponding to an access point to which the wireless communication terminal is permitted to connect, or the wireless communication terminal moves to another wireless communication area corresponding to another access point to which the wireless communication terminal is not permitted to connect, establishing a communication with a desired access point to which the wireless communication terminal is permitted to connect while being in either of the wireless communication areas, and disconnecting the wireless communication terminal from the access point when necessary.

### BRIEF DESCRIPTION OF THE DRAWINGS

[FIG. 1] FIG. 1 is a diagram illustrating a configuration of a control station according to a first embodiment of the present invention.
[FIG. 2] FIG. 2 is a diagram illustrating a process flow performed by a control management section according to the first embodiment of the present invention
[FIG. 3] FIG. 3 is diagram illustrating a process flow performed by a wireless communication terminal according to the first embodiment of the present invention.
[FIG. 4] FIG. 4 is a diagram illustrating a configuration of a beacon signal monitoring section according to the first embodiment of the present invention.
[FIG. 5] FIG. 5 is a diagram illustrating another configuration of the beacon signal monitoring section according to the first embodiment of the present invention.
[FIG. 6] FIG. 6 is a diagram illustrating another configuration of the beacon signal monitoring section according to the first embodiment of the present invention.
[FIG. 7] FIG. 7 is a block diagram illustrating a configuration of a wireless communication terminal according to the first embodiment of the present invention.
[FIG. 8] FIG. 8 is a diagram illustrating a configuration of a signal monitoring section according to a second embodiment of the present invention.
[FIG. 9] FIG. 9 is a diagram illustrating another configuration of the signal monitoring section according to the second embodiment of the present invention.
[FIG. 10] FIG. 10 is a diagram illustrating a configuration of a control station according to a third embodiment of the present invention.
[FIG. 11] FIG. 11 is a diagram illustrating a configuration of a channel information transmitting section according to the third embodiment of the present invention.
[FIG. 12] FIG. 12 is a diagram illustrating a wireless base station according to the third embodiment of the present invention.
[FIG. 13] FIG. 13 is a diagram illustrating a configuration of a conventional wireless LAN transmission system.

### DESCRIPTION OF THE REFERENCE CHARACTERS

- 1: Ethernet (registered trademark) cable
- 2: switching hub
- 3: control station
- 4: access point
- 5: switching section
- 6: transmission/reception separating section
- 7: control management section
- 8: signal monitoring section block
- 9, 15: optical transmission section
- 10, 16: optical reception section
- 11, 17: optical transmission/reception section
- 12: optical fiber
- 13: channel information transmitting block
- 14: wireless base station
- 18, 21, 811: band path filter
- 19: signal detecting section block
- 20: information displaying section
- 22: antenna section
- 23: wireless communication area
- 24: CPU
- 25: wireless modulation section
- 26: wireless transmission section
- 27: wireless demodulation section
- 28: wireless reception section
- 29: communication path-setting-change software storing section
- 132: isolator
- 812: signal detecting section
- 813: AND circuit
- 814: mixer
- 815: signal oscillator

### BEST MODE FOR CARRYING OUT THE INVENTION

### (first embodiment)

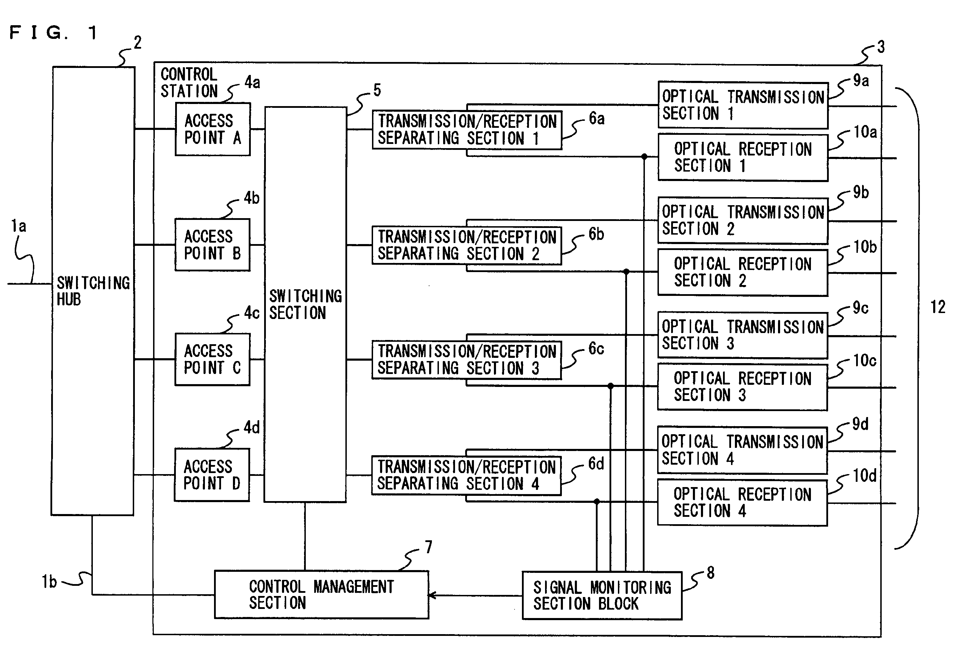

FIG. 1 is a diagram illustrating a configuration of a control station included in a wireless LAN transmission system according to a first embodiment of the present invention. Note that in an entire configuration of the wireless LAN transmission system, the descriptions of the same elements as those shown in FIG. 13 illustrating the configuration of the conventional wireless LAN transmission system will be omitted.

The wireless LAN transmission system according to the first embodiment of the present invention comprises the plurality of wireless base stations (see FIG. 13) and the control station 3.

As shown in FIG. 1, the control station 3 includes the access points 4a to 4d, the switching section 5, transmission/reception separating sections 6a to 6d, optical transmission section 9a to 9d, optical reception section 10a to 10d, a signal monitoring section block 8, and the control management section 7. Note that when it is unnecessary to distinguish between the access points 4a and 4d, between the transmission/reception separating sections 6a and 6d, between the optical transmission sections 9a and 9d, and between the optical reception section 10a and 10d, the access points 4a to 4d, the transmission/reception separating sections 6a to 6d, the optical transmission sections 9ato 9d, and the optical reception section 10a to 10d are generically referred to as the access point 4, the transmission/reception separating section 6, the optical transmission section 9, and the optical reception section 10, respectively.

When a signal transmitted to a wireless communication area in which a wireless communication terminal exists is not a signal transmitted from one desired wireless LAN access point 4, but is a signal transmitted from another wireless LAN access point to which the wireless communication terminal is not permitted to connect, the wireless communication terminal transmits a beacon signal for active scanning to the control station 3 via the wireless base station.

The access point 4a is connected to an external network (not shown) via an Ethernet (registered trademark) cable 1a and a switching hub 2. The access point 4 modulates a signal transmitted from the external network via the Ethernet (registered trademark) cable 1a with a wireless LAN signal, and outputs the modulated signal as an electric signal. In accordance with a communication path set by the control management section 7, the switching section 5 connects the outputted signal to the optical transmission section 9, which corresponds to a wireless base station to which the signal is to be transmitted. Note that the optical transmission/reception section 11 is simply shown in FIG. 13. However, as shown in FIG. 1, the optical transmission/reception section 11 includes the optical transmission section 9, the optical reception section 10, and the transmission/reception separating section 6. The transmission/reception separating section 6 is operable to achieve separation between a downlink signal and an uplink signal. The transmission/reception separating section 6 transmits a signal outputted from the access point 4 to the optical transmission section 9, and transmits a signal transmitted from the optical reception section 10 to the switching section 5.

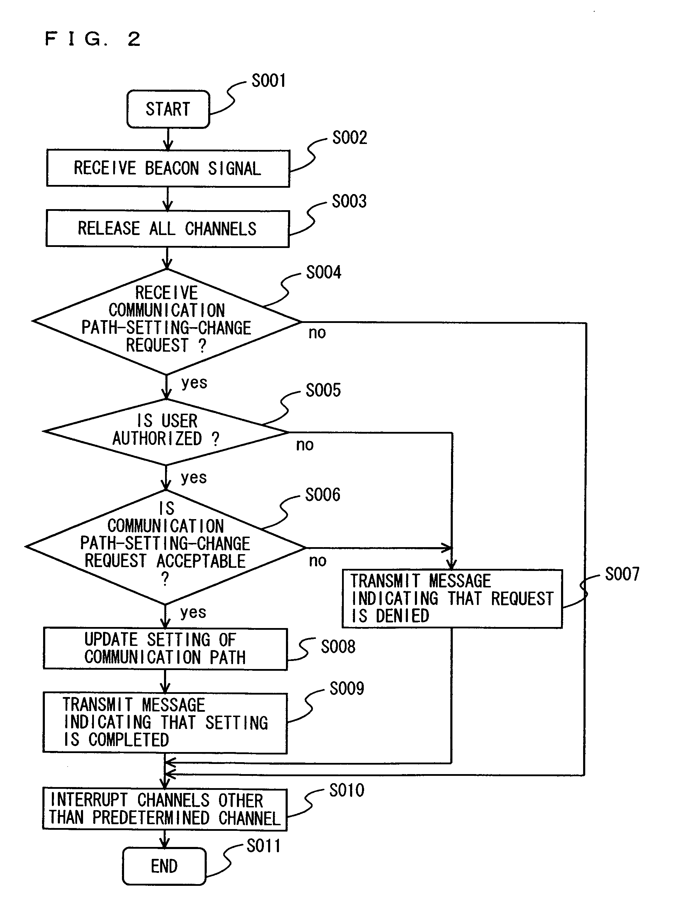

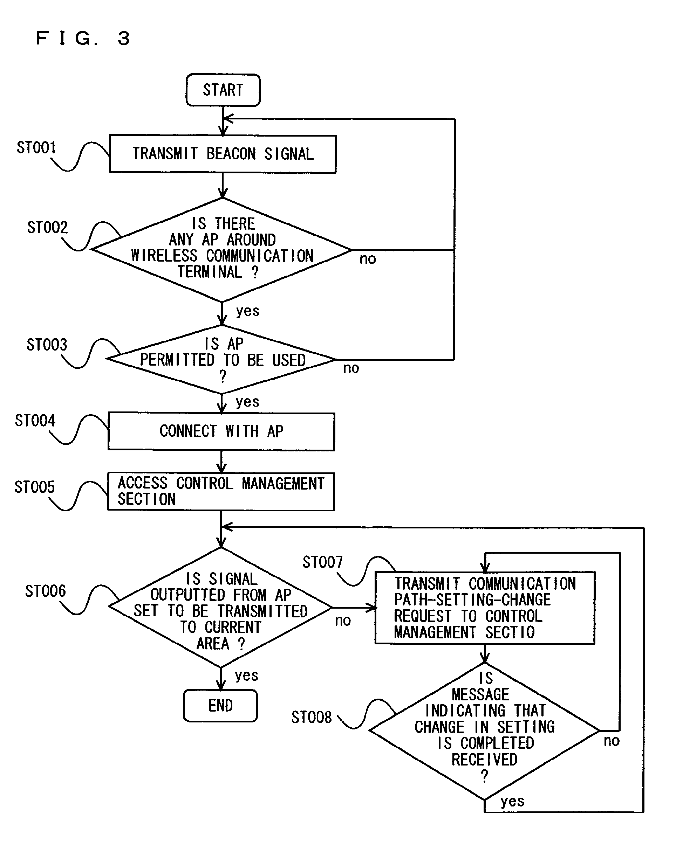

A portion of the uplink signal is separated therefrom, and the signal monitoring section block 8 monitors the beacon signal for active scanning which is transmitted from each of the wireless base stations. Note that the signal monitoring section block 8 is shown as one block in order to simplify the drawing. However, the signal monitoring section block 8 is a group of functions of individually monitoring signals transmitted from the optical reception section 10. Based on monitored information obtained from the signal monitoring section block 8, the control management section 7 changes the setting of the communication path. An operation of the control management section 7 will be described with reference to FIG. 2. FIG. 2 is a flowchart illustrating the operation of the control management section 7 according to the first embodiment of the present invention. FIG. 3 is a flowchart illustrating process steps performed by a wireless communication terminal changing a setting of a communication path. Note that the wireless communication terminal and the wireless base stations are shown in FIG. 13.

In a case where the signal monitoring section block 8 detects no beacon signal for active scanning included in a signal transmitted from each of the wireless base stations, the control management section 7 controls the switching section 5 so as to set the communication paths based on an initial setting (see FIG. 2, S001). When the signal monitoring section block 8 detects a beacon signal (S002), the control management section 7 changes an operation of the switching section 5 so as to transmit signals outputted from all of the access points 4 to a wireless base station through which the detected beacon signal has been transmitted (S003).

While receiving the signals outputted from all of the access points 4, the wireless communication terminal which has transmitted the beacon signal (see FIG. 3, ST001 to 003) is connected to the access point 4 to which the wireless communication terminal is permitted to connect via the wireless base station (ST004). This is only a temporary connection. In this state, the control management section 7 is installed in a network (in the control station 3) including the access point 4, thereby allowing the wireless communication terminal to access the control management section 7. For example, there is a method in which the wireless communication terminal can remotely control the control management section 7 by using a network function, or a method in which the wireless communication terminal can be connected to the control management section 7 by using a server function, thereby allowing the wireless communication terminal to display a control screen by means of a browser. Note that FIG. 1 shows that the control management section 7 is connected to the access point 4 and the switching hub 2 via the Ethernet (registered trademark) cable 1b. However, only if the wireless communication terminal can access the control management section 7 via the access point 4, the control management section 7 and other elements may be connected to each other in a different manner. When the wireless communication terminal can access the control management section 7 via the access point 4 (ST005), and it is determined that a signal, outputted from the access point 4 to which the wireless communication terminal is temporarily connected, is set so as not to be transmitted to a wireless communication area in which the wireless communication terminal exists (ST006), the wireless communication terminal transmits a communication path-setting-change request (ST007), and the communication path-setting-change request is repeatedly transmitted until a message, indicating that a change in the setting of the communication path has been completed, is transmitted to the wireless communication terminal (ST008). Upon receiving the communication path-setting-change request from the wireless communication terminal (S004), the control management section 7 examines whether the wireless communication terminal is operated by an authorized user by means of a password or a MAC address (S005), and determines whether it is possible to change the setting of the communication path in accordance with the communication path-setting-change request (S006). For example, if an access point is required to maintain particularly high security, there may be a case where a network manager previously sets the access point so as to restrict a communication area, by transmitting a signal only to a specified communication area. When it is determined that it is possible to change the setting of the communication path in accordance with the communication path-setting-change request, a stored setting is to be updated based on the communication path-setting-change request (S008). Thereafter, the control management section 7 transmits to the wireless communication terminal a message indicating that the change in the setting of the communication path has been completed (S009), and interrupts signals corresponding to channels other than a predetermined channel, so as to realize an updated setting of the communication path (S010), thereby making it possible to allow the wireless communication terminal to be connected with the desired access point via the wireless base station (S011). Thereafter, the wireless communication terminal is to be permanently connected to the desired access point. Taking security into consideration, when the control management section receives no communication path-setting-change request even after receiving a beacon signal, or a wireless communication terminal is not operated by an authorized user, it is preferable that the control management section interrupts, after a predetermined time period has passed, the signals corresponding to the channels other than the predetermined channel based on the initial setting.

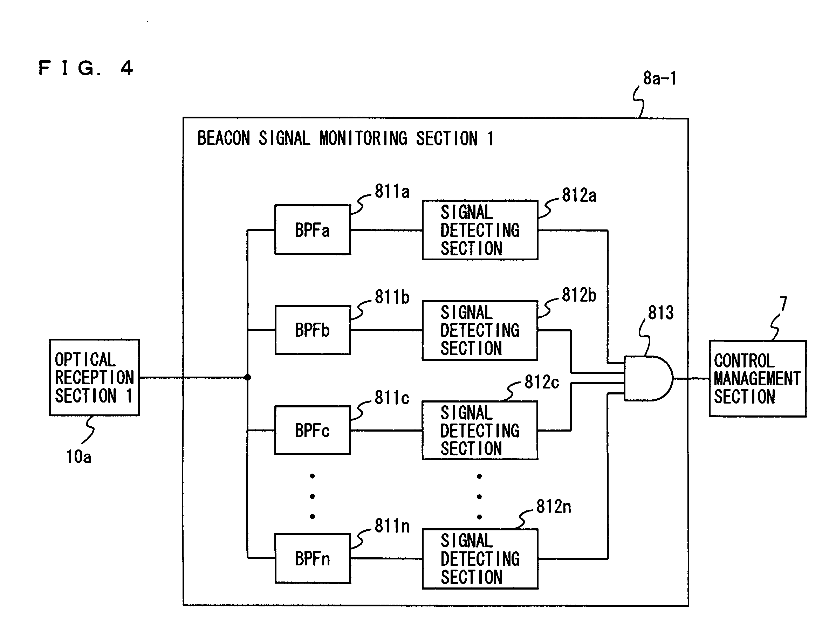

FIG. 4 is a diagram illustrating a detailed configuration of the signal monitoring section block 8. The signal monitoring section block 8 includes a plurality of beacon signal monitoring sections 8a-1, 8a-2,...(the remaining sections are not shown) for monitoring the signals transmitted from the optical reception section 10. As an example, a function block of monitoring a signal transmitted from the optical reception section 10a is the beacon signal monitoring section 8a-1.

The beacon signal monitoring section 8a-1 includes a plurality of band path filters 811a to 811n, a plurality of signal detecting sections 812a to 812n, and an AND circuit 813. Note that a configuration of each of other beacon signal monitoring sections is the same as that described above. Each of the band path filters has a function of passing a wavelength of a wireless LAN signal corresponding to each of the channels. For example, in a case where the wireless LAN system which complies with IEEE 802.11a is used, four band path filters, having center frequencies of 5.17GHz, 5.19GHz, 5.21GHz and 5.23GHz, and having a pass band of 18MHz or less, may be provided so as to correspond to four channels, respectively. Alternatively, in a case where the wireless LAN system which complies with IEEE802.11b is used, three band path filters, having the center frequencies of 2.412GHz, 2.437GHz and 2.462GHz (or a center frequency of 2.484GHz may be additionally included), and having a pass band of 22MHz or less, may be provided so as to correspond to three channels, respectively (in a case where the system is used in Japan). Note that depending on a system configuration, there may be a case where it is not necessary to provide all of the band path filters mentioned above. At least one of the band path filters needs to be provided so as to correspond to a channel which is not used in the system.

A signal transmitted from the optical reception section 10a is inputted to the band path filters 811a to 811n, and each of the signal detecting sections 812a to 812n detects whether the signal corresponding to each of the channels has been transmitted. Note that in FIG. 4, the number of the signal detecting sections is the same as that of the band path filters 811a to 811n. However, the signal detecting sections, whose number is smaller than that of the band path filters 811a to 811n, may be switched from one to another by using a switch or the like at a time interval shorter than a minimum time period required for monitoring a channel while performing active scanning, thereby detecting whether or not the signal corresponding to each of the channels has been transmitted.

When the signal, inputted to the band path filters 811a to 811n respectively corresponding to the channels, passes through all of the band path filters 811a to 811n within a predetermined time period, the AND circuit 813 outputs a signal so as to notify the control management section 7 that a beacon signal has been detected. In general, while active scanning is performed, a wireless communication terminal sequentially transmits a signal, changing a channel of the signal every several tens of microseconds. Therefore, by detecting whether or not the signal passes through all of the band path filters within several hundreds of microseconds, it is possible to determine whether or not the received signal indicates a beacon signal for active scanning. It is preferable that signals transmitted from the signal detecting section 812 are retained, for a predetermined time period, in an element provided between the signal detecting section 812 and the AND circuit 813, so as to be simultaneously inputted to the control management section 7.

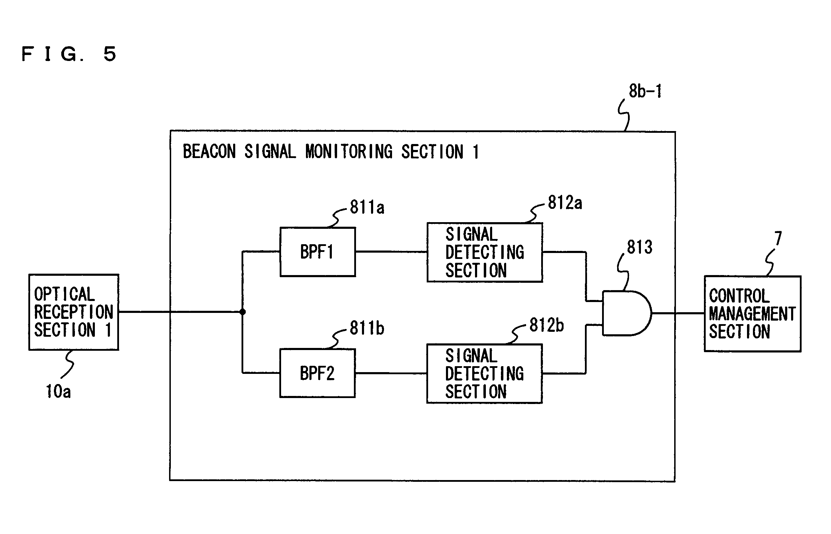

Generally in the wireless LAN system, when a plurality of access points are used, interference occurs between channels having adjacent frequencies. Thus, a frequency interval is provided between each two of the channels. Therefore, as shown in FIG. 5, two band path filters, respectively corresponding to the channels having frequencies adjacent to each other, are intentionally provided. At least either of the band path filters is provided so as to correspond to a channel which is not used in the system. Therefore, if a signal passes through the both band path filters, it can be determined that a beacon signal is transmitted from a wireless base station. As such, a configuration of a beacon signal monitoring section 8b-1 can be simpler than that of the beacon signal monitoring section 8a-1 shown in FIG. 4.

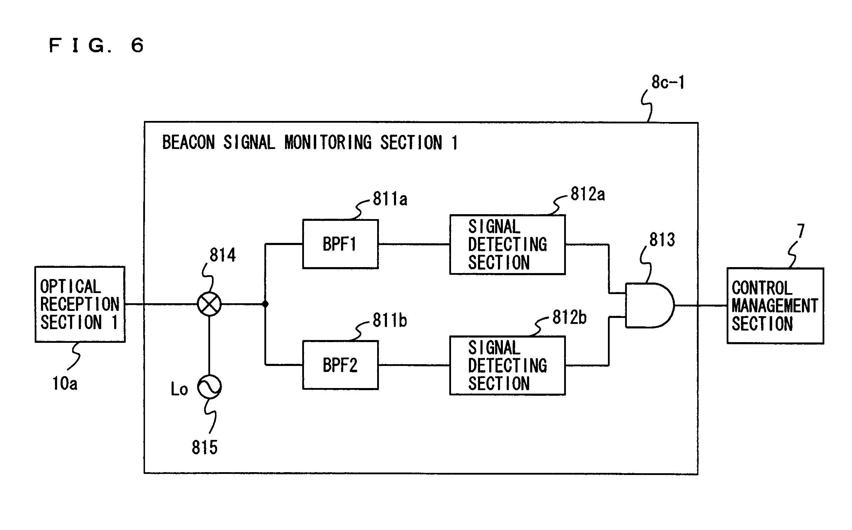

Alternatively, as shown in FIG. 6, a signal transmitted from the optical reception section 10 may be frequency-converted into a signal having a frequency lower than a wireless frequency of a wireless LAN signal, so as to pass through the band path filters 811a and 811b. FIG. 6 is a diagram illustrating a configuration of the beacon signal monitoring section. A basic configuration of a beacon signal monitoring section 8c-1 is substantially the same as those of the beacon signal monitoring sections shown in FIGs. 4 and 5, and the beacon monitoring section 8c-1 additionally includes a mixer 814, and a signal oscillator 815. Note that FIG. 6 shows two band path filters and two signal detecting sections. However, at least two band path filters and at least one signal detecting section are required.

This is because when only one band path filter is provided, it is impossible to determine whether a passed signal is an ordinary wireless LAN signal or a beacon signal.

A wireless LAN signal received by the optical reception section 10a is down-converted into a signal having a frequency lower than the wireless LAN signal by means of the mixer 814 and the signal oscillator 815, so as to be transmitted to the band path filters 811a and 811b. Therefore, in this case, center frequencies of the band path filters 811a and 811b are desirably set to be lower than those of the band path filters shown in FIG. 4 and FIG. 5. For example, when an oscillatory frequency of the signal oscillator 815 is 4.89GHz in the system which comprise with IEEE 802.11a, the center frequencies of the band path filter 811a and the band path filter 811b may be set to be 280MHz and 300MHz, respectively, and a pass band of both the band path filters 811a and 811b may be set to be 18MHz. Due to characteristics of components used for fabricating a band path filter, the lower a center frequency of the band path filter is, the more easily the band path filter can be designed. Thus, as compared to the band path filters shown in FIG. 4, the band path filters 811a and 811b shown in FIG. 6 can be fabricated more easily, and can be smaller in size.

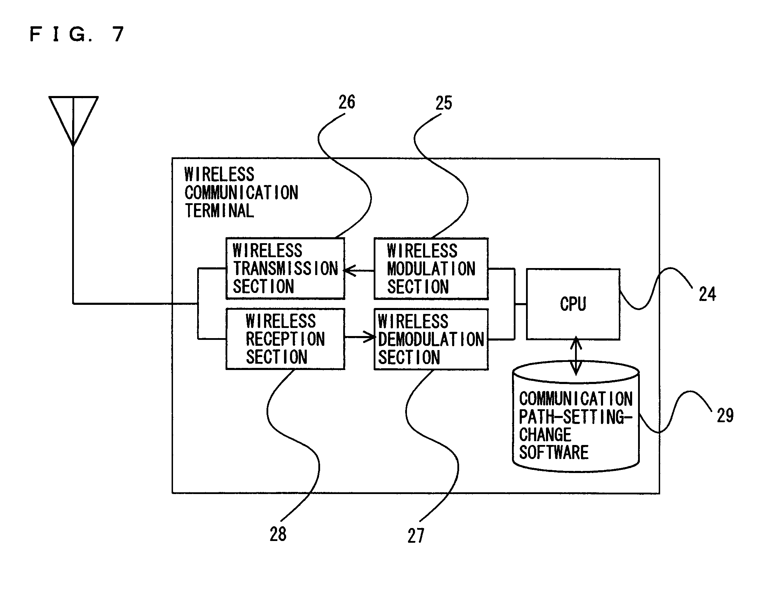

FIG. 7 is a block diagram illustrating a configuration of a wireless communication terminal of the present embodiment. The wireless communication terminal is a wireless communication terminal for communicating with networks inside and outside a local area by using the wireless LAN transmission system, and a wireless transmission section 26 is included therein.

In the wireless LAN transmission system, when a signal transmitted to a wireless communication area in which the wireless communication terminal exists is not a signal transmitted from a desired wireless LAN access point, but is a signal transmitted from a wireless LAN access point to which the wireless communication terminal is not permitted to have access, the wireless transmission section 26 is able to transmit a beacon signal.

In response to the transmitted beacon signal, when a signal is transmitted to the wireless communication terminal from at least one the wireless LAN access point to which the wireless communication terminal is permitted to connect, the wireless communication terminal receives the signal via a wireless base station included in the wireless LAN transmission system, thereby temporarily connecting with any of the at least one wireless LAN access point which has transmitted the signal.

Then, while temporarily connecting with the aforementioned access point, the wireless communication terminal transmits the communication path-setting-change request to the control management section of the wireless LAN transmission system.

After a setting of a communication path has been changed in accordance with the communication path-setting-change request, the wireless communication terminal permanently connects with a desired one of the at least one wireless LAN access point.

Such functions are realized mainly by means of a CPU 24 and a communication path-setting-change software.

The wireless communication terminal additionally includes the CPU 24, a wireless modulation section 25 connected to an output terminal of the CPU 24, a wireless transmission section 26 connected to the wireless modulation section 25, a wireless demodulation section 27 connected to an input terminal of the CPU 24, a wireless reception section 28 connected to the wireless demodulation section 27, and a communication path-setting-change software storing section 29 individually connected to the CPU 24.

Software stored in the communication path-setting-change software storing section 29 outputs a communication path-setting-change command to the CPU 24, when necessary. The CPU 24 issues a command for transmitting a beacon signal, when necessary. In response to the command, the wireless transmission section 26 releases a radio wave of the beacon signal into the air. Furthermore, in response to the command issued by the CPU 24, the wireless transmission section 26 releases a radio wave of a signal of the communication path-setting-change request described above. After a setting of a communication path is changed, the wireless communication terminal can permanently communicate with the desired one of the at least one access point.

### (second embodiment)

A second embodiment of the present invention will be described with reference to FIG. 1. A basic function of the second embodiment is the same as that of the first embodiment, and the descriptions thereof will be omitted.

In the first embodiment, the signal monitoring section block 8 monitors a beacon signal for active scanning, which is transmitted from each of the wireless base stations. In contrast, in the present embodiment, the beacon signal for active scanning and a data signal, both of which are transmitted from each of the wireless base stations, are monitored. When no signal is detected in the signal monitoring section block 8 for a predetermined period of time, the control management section 7 interrupts the signals outputted from all of the access points 4 to corresponding wireless base stations. As described above, in a case where no wireless communication terminal exists in a communication area, no wireless signal is to be transmitted to the communication area. Therefore, a malicious third party cannot tap or intercept a signal, or cannot connect to the network, thereby making it possible to improve security.

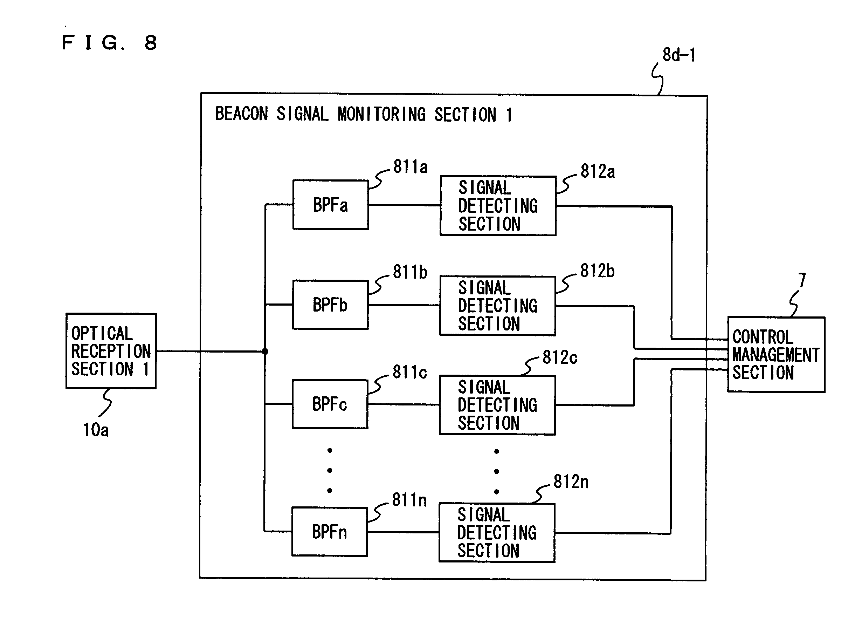

Furthermore, the signal monitoring section block 8 may monitor a signal corresponding to each of the channels. FIG. 8 is a diagram illustrating a signal monitoring section 8d-1, corresponding to one of the wireless base stations, which is included in the signal monitoring section block 8. A basic function of the signal monitoring section 8d-1 is the same as that of the beacon signal monitoring section shown in FIG. 4. However, in an example shown in FIG. 8, the AND circuit 813 is not provided, and information monitored by the signal detecting section 812 provided for the signal corresponding to each of the channels is transmitted to the control management section 7 so as to control an operation. Therefore, a timing, of disconnecting a wireless communication terminal from each of the access points, can be managed, thereby making it possible to further improve the security, as compared with a case where a wireless communication terminal is disconnected from all of the access points when no signal transmitted from the wireless communication terminal is detected.

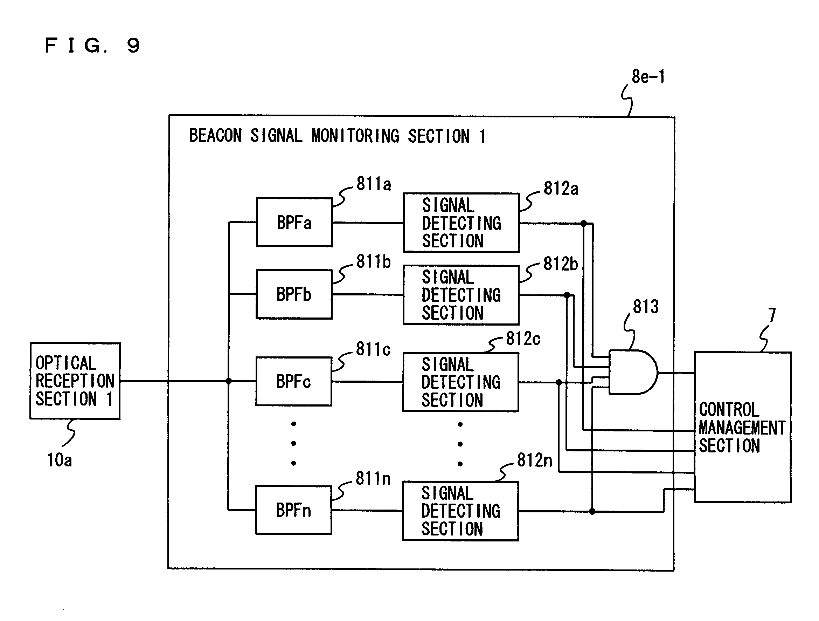

Still furthermore, preferably, the signal monitoring section block 8 may include both the beacon signal monitoring section and the signal monitoring section. When no signal is detected in the signal monitoring section, signals outputted from all of the access points may not be transmitted to a wireless base station, and when a beacon signal for active scanning is detected, a setting of a channel may be changed in accordance with the flowchart shown in FIG. 2. In this case, the beacon signal monitoring section and the signal monitoring section may be individually provided in the signal monitoring section block 8. Or as shown in FIG. 9, the band path filter 811 and the signal detecting section 812 which are the same as those shown in FIG. 8 are provided, and a wiring connected between the signal detecting section 812 and the control management section 7 may be branched, thereby causing an information signal outputted from the signal detecting section 812 topass through two communication paths. Then, the information signal, outputted from the signal detecting section 812, which passes through one of the communication paths, may be inputted to the AND circuit 813, and the information signal, outputted from the signal detecting section 812, which passes through the other of the communication paths, may be directly inputted to the control management section 7, without passing through the AND circuit 813.
In a case of an example shown in FIG. 9, among signals passing through the signal detecting section 812, by using a signal which passes through the AND circuit 813, a signal for active scanning can be monitored, and by using a signal which does not pass through the AND circuit 813, a wireless LAN signal outputted from each of the access points, i.e., a wireless LAN signal corresponding to each of the channels, can be individually monitored in a similar manner to that shown in FIG. 8, thereby making it possible to interrupt a signal corresponding to each of the channels when the signal is unnecessary.

Furthermore, regardless of the presence or absence of a data signal, the control management section 7 may switch an operation, at a predetermined time interval, so as not to transmit signals outputted from all of the access points or not to transmit a signal outputted from a predetermined access point. Thereafter, when a beacon signal is detected, the control management section 7 may change the setting of the channel in accordance with the flowchart shown in FIG. 2. Thus, it can be regularly determined whether or not a user is authorized, thereby making it possible to further improve the security.

Still furthermore, the control station 3 may include a detection section for detecting unauthorized access from a wireless communication area. As one method of detecting the unauthorized access, there is a method of counting a time period in which the signal monitoring section block 8 does not receive a communication path-setting-change request from a wireless communication terminal, even in a state where the signal monitoring section block 8 detects a beacon signal for active scanning. In this case, when an authorized user operates a wireless communication terminal to perform a wireless communication in a wireless communication area, a malicious third party that is not connected to a system or network may intercept a wireless data signal transmitted and received by the wireless communication terminal operated by the authorized user. As another method, there may be a method of counting, even when the signal monitoring section 8 receives the communication path-setting-change request after the beacon signal for active scanning is detected, the number of times in which the communication path-setting-change request is denied. As such, when the unauthorized access is determined, it is desirable that regardless of the presence or absence of the beacon signal for active scanning and the data signal, the control management section 7 interrupts all the signals once, and returns the system to the initial setting after a predetermined time period has passed, or the network manager performs a manual reset.

### (third embodiment)

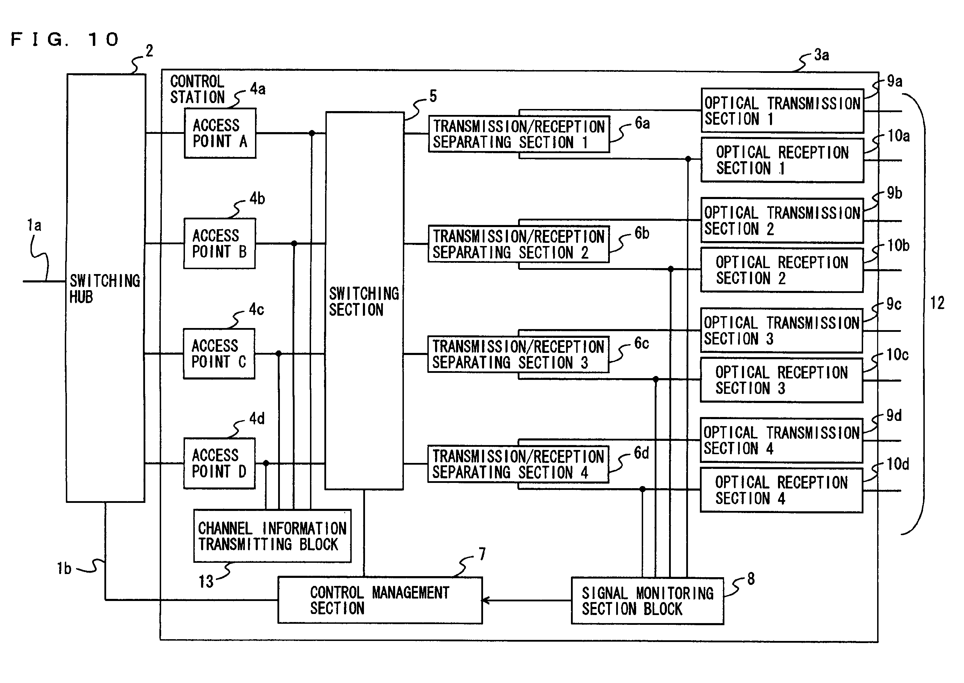

FIG. 10 is a diagram illustrating a configuration of a control station of a wireless LAN transmission system according to a third embodiment of the present invention. Note that an entire configuration of the wireless LAN transmission system is substantially the same as that of the conventional wireless LAN transmission system shown in FIG. 13, and a configuration of the control station is substantially the same as that of the control station shown in FIG. 1. Therefore, the descriptions of the same elements will be omitted.

The control station 3a of the present embodiment is different from the control station shown in FIG. 1 in that the control station 3a includes a channel information transmitting block 13, and a channel information signal transmitted from the channel information transmitting block 13 is superimposed on each of signals passing between the access point 4 and the switching section 5. Note that the channel information transmitting block 13 is illustrated as one block in order to simplify the drawing. However, the signal monitoring section block 8 is a group of functions of individually superimposing the channel information signals on the wireless LAN signals transmitted from the access point 4.

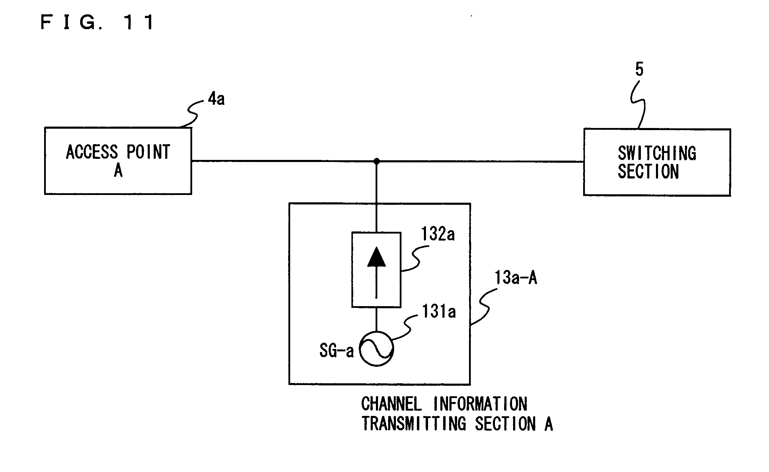

FIG. 11 is a diagram illustrating a detailed configuration of the channel information transmitting block 13. The channel information transmitting block 13 includes a plurality of signal oscillators 131a-A, 131a-B, ... (the remaining oscillators are not shown) and a plurality of isolators 132a, ... (the remaining isolators are not shown), and oscillatory frequencies of the plurality of signal oscillators 131a... are different from each other. As an example, a function of superimposing the channel information signal on a wireless LAN signal transmitted from the access point 4a is a channel information transmitting section 13a-A. Note that the isolator 132 is operable to prevent frequency fluctuation to be caused when a signal is reversely inputted to the signal oscillator 131. If the signal oscillator 131 allows for a certain amount of the frequency fluctuation, the isolator 132 may not be provided.

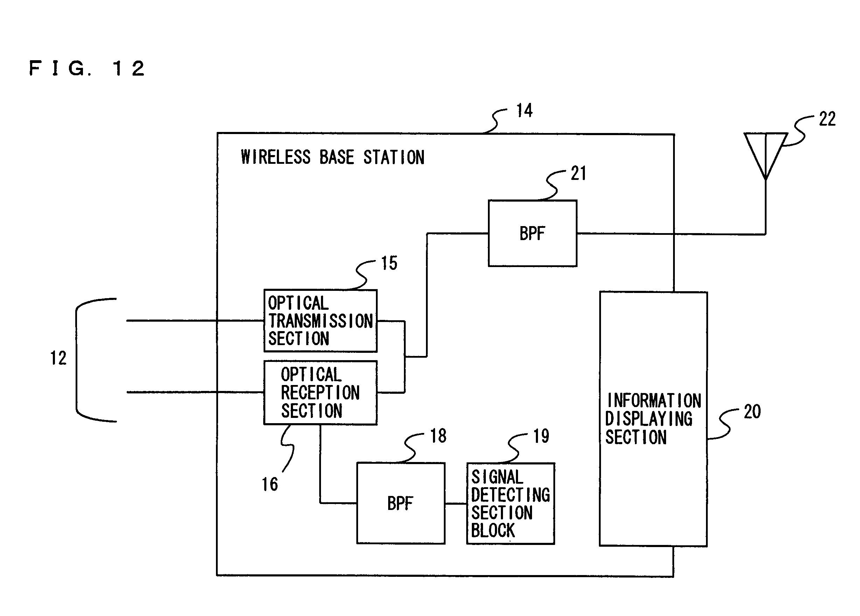

The channel information signal transmitted from each of the signal oscillators 131 is superimposed on each of the wireless LAN signals transmitted from the access point 4, and the switching section 5 changes a communication path connected to each of the wireless base stations. For example, when a signal outputted from the access point 4a is transmitted to a wireless base station, the channel information signal outputted from the channel information transmitting section 13a-A is also transmitted simultaneously to the wireless base station. FIG. 12 is a diagram illustrating a configuration of a wireless base station included in the wireless LAN transmission system according to the present embodiment of the present invention. The wireless base station 14 includes an optical transmission section 15, an optical reception section 16, band path filters 18 and 21, a signal detecting section 19, an information displaying section 20, and an antenna 22.

The wireless LAN signal and the channel information signal, both of which are transmitted, as an optical signal, from the control station 3 via the optical fiber 12 is converted into an electric signal in the optical reception section 16, and the electric signal is caused to be transmitted through two communication paths, so as to pass through the band path filters 18 and 21. The band path filter 18 has a pass band for passing the channel information signal, and the band path filter 21 has a pass band for passing the wireless LAN signal. Note that an oscillatory frequency of the signal oscillator 131 may be set to be lower than that of the wireless LAN signal, so as to use the band path filter 18 as a low pass filter and to use the band path filter 21 as a high pass filter. Note that the band path filter 18 is operable to prevent a malfunction, of the signal detecting section block 19, to be caused by a leakage of a high frequency component. If no malfunction is caused by the leakage of the high frequency component, the band path filter 18 may not be provided.

Next, a configuration of the signal detecting section block 19 will be described with reference to FIG. 8. A basic function of the signal detecting section block 19 is the same as that of the signal monitoring section shown in FIG. 8, and the signal detecting section block 19 is different from the signal monitoring section shown in FIG. 8 in that a pass band of the band path filter 811 corresponds to an oscillate frequency transmitted from the signal oscillator 131 (see FIG. 11). Therefore, when a signal having a frequency corresponding to each of the access points is detected, information of the signal is displayed by means of the information displaying section 20.

Note that it is preferable that a certain frequency interval is provided between each two of the oscillate frequencies of the signal oscillator 131, and the harmonic components of each of the signals outputted from the channel information transmitting block 13 does not overlap with a frequency band of a wireless LAN signal outputted from each of the access points.

As described above, by providing a channel information transmitting section in the control station 3, it becomes possible to detect channel information by means of a band path filter which is simpler than that used for directly detecting a channel corresponding to the wireless LAN signal.

Furthermore, it is preferable that each of the wireless communication terminals used in the wireless LAN transmission system described in the first to fourth embodiments has a function of transmitting a beacon signal when a signal transmitted to a wireless communication area in which each of the wireless communication terminals exists is not a signal transmitted from a desired access point, of connecting with the desired access point while the control station 3 transmits signals outputted from all the access points to the each of the wireless communication terminals, and of transmitting the communication path-setting-change request to the control management section.

Still furthermore, the aforementioned function may be provided for all of the wireless communication terminals used in the wireless LAN transmission system of the present invention, or the aforementioned function may be provided for only a limited number of specified wireless communication terminals (owned by the network manager).

### INDUSTRIAL APPLICABILITY

The present invention is applicable to a wireless LAN transmission system, for example, having the convenience and improved security, in which a wireless communication terminal located in a wireless communication area is capable of changing a setting of a connection, and capable of disconnecting the wireless communication terminal from the connection if the connection is unnecessary.

## Claims

1. A wireless LAN transmission system capable of allowing a wireless communication terminal existing in a local area to communicate with networks inside and outside the local area, the wireless LAN transmission system comprising:
a wireless base station for forming a wireless communication area in the local area, and performing a wireless communication with the wireless communication terminal existing in the wireless communication area corresponding to the wireless base station, by means of the wireless LAN transmission system; and
a control station including at least one wireless LAN access point which is connected to the wireless base station via a wired communication path, wherein
the control station includes: a communication path switching section for transmitting a signal outputted from each of the at least one wireless LAN access point to the wireless base station; a control management section for controlling the communication path switching section and storing the communication path having been set; and a beacon signal detecting section for detecting a beacon signal for active scanning transmitted from the wireless communication terminal via the wireless base station, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, and
the control management section has a control station for controlling the communication path switching section so as to transmit signals outputted from all of the at least one wireless LAN access point to the wireless base station through which the beacon signal has been transmitted, when the beacon signal is detected in the beacon signal detecting section, and
causes the wireless communication terminal to temporarily connect with any of the at least one wireless LAN access point to which the wireless communication terminal is permitted to connect, by changing the communication path based on the beacon signal, and
causes the wireless communication terminal to permanently connect with the predetermined one of the at least one wireless LAN access point to which the wireless communication terminal is permitted to connect, based on a communication path-setting-change request transmitted from the wireless communication terminal to the control management section, while the wireless communication terminal is temporarily connected with the any of the at least one wireless LAN access point to which the wireless communication terminal is permitted to connect.

2. The wireless LAN transmission system according to claim 1, wherein
channels, having frequencies different from each other, are respectively set for the at least one wireless LAN access point,
the wireless communication terminal is able to transmit a wireless LAN channel signal corresponding to each of the at least one wireless LAN access point, and
the beacon signal detecting section includes:
a plurality of band path filters having frequency bands in which the wireless LAN channel signal transmitted from the wireless communication terminal is inputted to the band path filters respectively corresponding to the channels, and the wireless LAN channel signal inputted to each of the band path filters is extracted; a signal detecting section for detecting a signal which has passed through each of the band path filters; and
a determination section for determining whether or not the wireless LAN signal inputted to all of the band path filters is extracted within a predetermined time period, and determining that the beacon signal has been transmitted, when it is determined that the wireless LAN signal inputted to all of the band path filters is extracted within the predetermined time period.

3. The wireless LAN transmission system according to claim 1, wherein
channels, having frequencies different from each other, are respectively set for the at least one wireless LAN access point,
the wireless communication terminal is able to transmit a wireless LAN channel signal corresponding to each of the at least one wireless LAN access point, and
the beacon signal detecting section includes:
two band path filters; and a signal detecting section for detecting a signal which has passed through each of the band path filters, wherein
the two band path filters have frequency bands in which the wireless LAN channel signal transmitted from the wireless communication terminal is inputted to the two band path filters respectively corresponding to the channels having frequencies adj acent to each other, and the wireless LAN channel signal inputted to each of the two band path filters is extracted, and a determination section for determining whether or not the wireless LAN signal inputted to all of the two band path filters is extracted within a predetermined time period, and determining that the beacon signal has been transmitted, when it is determined that the wireless LAN signal inputted to all of the two band path filters corresponding to the channels having the frequencies adjacent to each other is extracted within the predetermined time period.

4. The wireless LAN transmission system according to claim 1, wherein
the beacon signal detecting section includes: a conversion section for frequency-converting a signal; at least two band path filters for passing the frequency-converted signal; and a signal detecting section for detecting the signal which has passed through each of the band path filters, wherein
the beacon signal detecting section has a determination section for determining whether or not the frequency-converted signal passes through all of the band path filters within a predetermined time period, and determining that the beacon signal has been transmitted, when it is determined that the frequency-converted signal passes through all of the band path filters within the predetermined time period.

5. A wireless LAN transmission system capable of allowing a wireless communication terminal existing in a local area to communicate with networks inside and outside the local area, the wireless LAN transmission system comprising:
a wireless base station for forming a wireless communication area in the local area, and performing a wireless communication with the wireless communication terminal existing in the wireless communication area corresponding to the wireless base station, by means of the wireless LAN transmission system; and
a control station including at least one wireless LAN access point which is connected to the wireless base station via a wired communication path, wherein
the control station includes: a communication path switching section for transmitting a signal outputted from each of the at least one wireless LAN access point to the wireless base station; a control management section for controlling the communication path switching section and storing the communication path having been set; and a signal detecting section for detecting a signal transmitted from the wireless communication terminal via the wireless base station, wherein
when the signal transmitted from the wireless communication terminal is not detected in the signal detecting section within a predetermined time period, the control management section changes the communication path so as not to transmit signals outputted from all of the at least one wireless LAN access point to the wireless base station.

6. The wireless LAN transmission system according to claim 5, wherein
the signal detecting section detects a signal corresponding to a channel set for each of the at least one wireless LAN access point, and
when the signal corresponding to the channel set for each of the at least one wireless LAN access point is not detected within a predetermined time period, the control management section changes the communication path so as not to transmit the signal corresponding to the channel set for each of the at least one wireless LAN access point.

7. A wireless LAN transmission system capable of allowing a wireless communication terminal existing in a local area to communicate with networks inside and outside the local area, the wireless LAN transmission system comprising:
a wireless base station for forming a wireless communication area in the local area, and performing a wireless communication with the wireless communication terminal existing in the wireless communication area corresponding to the wireless base station, by means of the wireless LAN transmission system; and
a control station including at least one wireless LAN access point which is connected to the wireless base station via a wired communication path, wherein
channels, having frequencies different from each other, are respectively set for the at least one wireless LAN access point,
the control station includes: a communication path switching section for transmitting a signal outputted from each of the at least one wireless LAN access point to the wireless base station; a control management section for controlling the communication path switching section and storing the communication path having been set; and a beacon signal detecting section for detecting a beacon signal for active scanning transmitted from the wireless communication terminal via the wireless base station, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, and
the control management section has a control station for controlling the communication path switching section so as to transmit signals outputted from all of the at least one wireless LAN access point to the wireless base station through which the beacon signal has been transmitted, when the beacon signal is detected in the beacon signal detecting section, and
causes the wireless communication terminal to temporarily connect with any of the at least one wireless LAN access point to which the wireless communication terminal is permitted to connect, by changing the communication path based on the beacon signal, and
causes the wireless communication terminal to permanently connect with the predetermined one of the at least one wireless LAN access point to which the wireless communication terminal is permitted to connect, based on a communication path-setting-change request transmitted from the wireless communication terminal to the control management section, while the wireless communication terminal is temporarily connected with the any of the at least one wireless LAN access point to which the wireless communication terminal is permitted to connect, and
changes, when the beacon signal detecting section does not detect signals corresponding to all of the channels or a signal corresponding to a predetermined one of the channels, the communication path so as not to transmit the signals outputted from all of the at least one access point or the signal outputted from one of the at least one access point set for the predetermined one of the channels, to the wireless base station through which the beacon signal has been transmitted.

8. The wireless LAN transmission system according to claim 7, wherein
the control management section changes, at a predetermined time interval, the communication path so as not to transmit the signals outputted from all of the at least one access point or the signal outputted from the one of the at least one access point set for the predetermined one of the channels, to the wireless base station, and
changes the communication path so as to transmit the signals outputted from all of the at least one wireless LAN access point to the wireless base station, when the beacon signal is detected in the beacon signal detecting section, and
operates in accordance with a communication path setting, which is stored in the control management section when a predetermined time period has passed after the beacon signal is detected.

9. A wireless LAN transmission system capable of allowing a wireless communication terminal existing in a local area to communicate with networks inside and outside the local area, the wireless LAN transmission system comprising:
a wireless base station for forming a wireless communication area in the local area, and performing a wireless communication with the wireless communication terminal existing in the wireless communication area corresponding to the wireless base station, by means of the wireless LAN transmission system; and
a control station including at least one wireless LAN access point which is connected to the wireless base station via a wired communication path, wherein
the control station includes: a communication path switching section for transmitting a signal outputted from each of the at least one wireless LAN access point to the wireless base station; a control management section for controlling the communication path switching section and storing the communication path having been set; and a detection section for detecting unauthorized access from the wireless communication area, and
the control management section causes the control management section not to transmit, for a predetermined time period, signals outputted from all of the at least one wireless LAN access point to the wireless base station, when the unauthorized access is detected in the detection section.

10. The wireless LAN transmission system according to claim 1, wherein
the wireless base station has a communication path setting information displaying section for displaying communication path setting information, of each of the at least one wireless LAN access point, which is transmitted from the control station.

11. The wireless LAN transmission system according to claim 5, wherein
the wireless base station has a communication path setting information displaying section for displaying communication path setting information, of each of the at least one wireless LAN access point, which is transmitted from the control station.

12. The wireless LAN transmission system according to claim 7, wherein
the wireless base station has a communication path setting information displaying section for displaying communication path setting information, of each of the at least one wireless LAN access point, which is transmitted from the control station.

13. The wireless LAN transmission system according to claim 9, wherein
the wireless base station has a communication path setting information displaying section for displaying communication path setting information, of each of the at least one wireless LAN access point, which is transmitted from the control station.

14. The wireless LAN transmission system according to claim 10, wherein
the control station includes signal oscillators, whose number is the same as that of the at least one wireless LAN access point, for transmitting signals having oscillatory frequencies different from each other, and superimposes each of the signals transmitted from the signal oscillators on the signal transmitted through the communication path from each of the at least one wireless LAN access point, so as to be transmitted to the wireless base station, and
the wireless base station includes: a detection section for detecting each of the signals transmitted from the signal oscillators; and
a display section for displaying that the signal outputted from each of the at least one wireless LAN access point is transmitted, when the detection section detects each of the signals transmitted from the signal oscillators.

15. The wireless LAN transmission system according to claim 11, wherein
the control station includes signal oscillators, whose number is the same as that of the at least one wireless LAN access point, for transmitting signals having oscillatory frequencies different from each other, and superimposes each of the signals transmitted from the signal oscillators on the signal transmitted through the communication path from each of the at least one wireless LAN access point, so as to be transmitted to the wireless base station, and
the wireless base station includes: a detection section for detecting each of the signals transmitted from the signal oscillators; and
a display section for displaying that the signal outputted from each of the at least one wireless LAN access point is transmitted, when the detection section detects each of the signals transmitted from the signal oscillators.

16. The wireless LAN transmission system according to claim 12, wherein
the control station includes signal oscillators, whose number is the same as that of the at least one wireless LAN access point, for transmitting signals having oscillatory frequencies different from each other, and superimposes each of the signals transmitted from the signal oscillators on the signal transmitted through the communication path from each of the at least one wireless LAN access point, so as to be transmitted to the wireless base station, and
the wireless base station includes: a detection section for detecting each of the signals transmitted from the signal oscillators; and
a display section for displaying that the signal outputted from each of the at least one wireless LAN access point is transmitted, when the detection section detects each of the signals transmitted from the signal oscillators.

17. The wireless LAN transmission system according to claim 13, wherein
the control station includes signal oscillators, whose number is the same as that of the at least one wireless LAN access point, for transmitting signals having oscillatory frequencies different from each other, and superimposes each of the signals transmitted from the signal oscillators on the signal transmitted through the communication path from each of the at least one wireless LAN access point, so as to be transmitted to the wireless base station, and
the wireless base station includes: a detection section for detecting each of the signals transmitted from the signal oscillators; and
a display section for displaying that the signal transmitted from each of the at least one wireless LAN access point is transmitted, when the detection section detects each of the signals outputted from the signal oscillators.

18. A wireless communication terminal for communicating with networks inside and outside a local area by using the wireless LAN transmission system according to claim 1, the wireless communication terminal comprising:
a transmission section for transmitting a beacon signal, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, in the wireless transmission system, wherein
when a signal is transmitted, in response to the transmitted beacon signal, to the wireless communication terminal from any of the at least one wireless LAN access point to which the wireless communication is permitted to connect, the wireless communication terminal receives the signal via a wireless base station included in the wireless LAN transmission system, and temporarily connects with the any of the at least one wireless LAN access point which has transmitted the signal, and
transmits a communication path-setting-change request to the control management section included in the wireless LAN transmission system, while the wireless communication terminal is temporarily connected with the any of the at least one wireless LAN access point, and
permanently connects with the predetermined one of the at least one wireless LAN access point to which the wireless communication terminal is permitted to connect, after a setting of a communication path is changed in accordance with the communication path-setting-change request.

19. A wireless communication terminal for communicating with networks inside and outside a local area by using the wireless LAN transmission system according to claim 5, the wireless communication terminal comprising:
a transmission section for transmitting a beacon signal, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, in the wireless transmission system, wherein
when a signal is transmitted, in response to the transmitted beacon signal, to the wireless communication terminal from any of the at least one wireless LAN access point to which the wireless communication is permitted to connect, the wireless communication terminal receives the signal via a wireless base station included in the wireless LAN transmission system, and temporarily connects with the any of the at least one wireless LAN access point which has transmitted the signal, and
transmits a communication path-setting-change request to the control management section included in the wireless LAN transmission system, while the wireless communication terminal is temporarily connected with the any of the at least one wireless LAN access point, and
permanently connects with the predetermined one of the at least one wireless LAN access point to which the wireless communication terminal is permitted to connect, after a setting of a communication path is changed in accordance with the communication path-setting-change request.

20. A wireless communication terminal for communicating with networks inside and outside a local area by using the wireless LAN transmission system according to claim 7, the wireless communication terminal comprising:
a transmission section for transmitting a beacon signal, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, in the wireless transmission system, wherein
when a signal is transmitted, in response to the transmitted beacon signal, to the wireless communication terminal from any of the at least one wireless LAN access point to which the wireless communication is permitted to connect, the wireless communication terminal receives the signal via a wireless base station included in the wireless LAN transmission system, and temporarily connects with the any of the at least one wireless LAN access point which has transmitted the signal, and
transmits a communication path-setting-change request to the control management section included in the wireless LAN transmission system, while the wireless communication terminal is temporarily connected with the any of the at least one wireless LAN access point, and
permanently connects with the predetermined one of the at least one wireless LAN access point to which the wireless communication terminal is permitted to connect, after a setting of a communication path is changed in accordance with the communication path-setting-change request.

21. A wireless communication terminal for communicating with networks inside and outside a local area by using the wireless LAN transmission system according to claim 9, the wireless communication terminal comprising:
a transmission section for transmitting a beacon signal, when a signal transmitted to the wireless communication area in which the wireless communication terminal exists is not a signal transmitted from a predetermined one of the at least one wireless LAN access point, but is a signal transmitted from any of the at least one wireless LAN access point to which the wireless communication terminal is not permitted to connect, in the wireless transmission system, wherein
when a signal is transmitted, in response to the transmitted beacon signal, to the wireless communication terminal from any of the at least one wireless LAN access point to which the wireless communication is permitted to connect, the wireless communication terminal receives the signal via a wireless base station included in the wireless LAN transmission system, and temporarily connects with the any of the at least one wireless LAN access point which has transmitted the signal, and
transmits a communication path-setting-change request to the control management section included in the wireless LAN transmission system, while the wireless communication terminal is temporarily connected with the any of the at least one wireless LAN access point, and
permanently connects with the predetermined one of the at least one wireless LAN access point to which the wireless communication terminal is permitted to connect, after a setting of a communication path is changed in accordance with the communication path-setting-change request.
